# EUROPEAN PATENT SPECIFICATION

(11) **EP 3 767 173 B1**
(45) Date of publication and mention of the grant of the patent: **24.04.2024**
(21) Application number: 19767467.4
(22) Date of filing: 06.03.2019
(51) Int. Cl.: F23C 10/04, F23G 5/30, F23C 10/06, F23C 10/14

(54) **FLUIDIZED BED HEAT RECOVERY DEVICE**
VORRICHTUNG ZUR WÄRMERÜCKGEWINNUNG IN EINEM WIRBELBETT
DISPOSITIF DE RÉCUPÉRATION DE CHALEUR À LIT FLUIDISÉ

(30) Priority: 13.03.2018 JP 2018045077
(43) Date of publication of application: 20.01.2021
(73) Proprietor: Ebara Environmental Plant Co., Ltd., Tokyo 144-0042 (JP)
(72) Inventor: KUDO, Sho, Tokyo 144-0042 (JP); NAGATO, Shuichi, Tokyo 144-0042 (JP); ISHIKAWA, Eiji, Tokyo 144-0042 (JP); KAJIWARA, Hirokazu, Tokyo 144-0042 (JP); NOGUCHI, Manabu, Tokyo 144-0042 (JP); MATSUOKA, Kei, Tokyo 144-0042 (JP)
(74) Representative: Schmidbauer, Andreas Konrad
(86) International application number: PCT/JP2019/008849
(87) International publication number: WO 2019/176685

(56) References cited:
- EP-A2- 0 722 067
- JP-A- H0 933 021
- JP-A- H05 106 807
- JP-A- H09 196 313
- JP-A- 2000 199 616
- JP-A- 2000 199 616
- JP-A- 2001 132 925
- US-A- 5 156 099
- US-A- 6 139 805

## Description

### Technical field

The present invention relates to a fluidized-bed heat recovery apparatus having a function of a heat recovery chamber for uniformly oxidizing, such as combusting or gasifying, solid materials including municipal wastes, industrial wastes, coal, and incombustibles, and for stably recovering heat energy while smoothly discharging incombustibles.

### Background Art

With economic development, about 44 million tons of general wastes, and about 400 million tons of industrial wastes are annually generated and treated. Some of these wastes are incinerated, and heat energy from the exhaust gas generated during the incineration process is effectively used for power generation and other purposes. In consideration of environmental issues, it is required to efficiently recover the heat energy.

However, in these wastes, particularly in the industrial wastes, the shape and properties of the wastes are very diverse and not constant. Further, a variety of incombustibles with irregular shapes are mixed. Therefore, it is difficult to achieve stable combustion and treatment, thus preventing the effective use of waste energy.

In order to effectively utilize energy from the general wastes and the industrial wastes, various systems have been developed for the purpose of recovering heat energy via oxidation reactions, such as incineration. Of such various systems, a fluidized-bed boiler is expected as a system capable of uniformly incinerating solid materials including incombustibles, and capable of stably recovering heat energy while smoothly discharging incombustibles. However, such a fluidized-bed boiler has the following drawback.

In a bubbling fluidized bed where fluidized medium is actively ascending and descending, the flow of the fluidized medium is only in the vertical direction. Therefore, dispersion of incinerated materials is insufficient, and thus uniform and stable combustion is difficult. Further, incombustibles having a higher specific gravity than the fluidized medium are accumulated extensively on a furnace bed, and as a result, discharging of the incombustibles may be difficult, interfering with operations. Therefore, a method has been developed which forms a swirling flow of fluidized medium by varying a fluidizing velocity in a dense fluidized bed to improve mixing and dispersion of the incinerated materials, and can achieve uniform and stable combustion.

However, as in a conventional internally circulating fluidized-bed boiler (ICFB), a discharge port of the fluidized medium and the incombustibles is located near an outlet of a heat recovery chamber. Such an arrangement may form a fixed layer (non-fluidized region) in an upper portion of the discharge port, thereby preventing a smooth circulation of the fluidized medium from a heat recovery chamber to a main combustion chamber. Therefore, there has been a demand for solution of such issue.

With respect to the above, reference is made to JP 07-056 361 A. Attention is also drawn to US 6 139 805 A, related to a fluidized-bed reactor suitable for recovering thermal energy from oxidized combustible materials while discharging incombustible materials. The fluidized-bed reactor comprises a plurality of fluidizing gas diffusion devices disposed at a bottom of a fluidized-bed furnace for imparting different fluidizing speeds to the fluidized medium in a fluidized bed in the fluidized-bed furnace to form an upward flow of the fluidized medium in a fluidizing region with a substantially high fluidizing speed of the fluidized medium and a descending flow of the fluidized medium in a fluidizing region with a substantially low fluidizing speed of the fluidized medium. A plate-like thermal energy recovery device is disposed in the fluidizing region with the substantially low fluidizing speed of the fluidized medium and has a heat recovery surface extending vertically. US 5 156 099 A is also related to a fluidized-bed reactor providing different fluidizing speeds to form regions with an upward flow and a downward flow.

### Summary of Invention

### Technical Problem

The present invention has been made in view of the above drawback. It is therefore an object of the present invention to provide a fluidized-bed heat recovery apparatus capable of performing a smooth circulation of a fluidized medium from a heat recovery chamber (or a heat recovery region) to a main combustion chamber (or a main combustion region), uniformly combusting solid materials including incombustibles, and stably recovering heat energy while smoothly discharging the incombustibles.

### Solution to Problem

In accordance with the present invention, a fluidized-bed heat recovery apparatus as set forth in claim 1 is provided. Further embodiments are inter alia disclosed in the dependent claims.

According to a preferred aspect of the present invention, the gas diffuser further comprises a third gas diffuser configured to give a relatively small fluidizing velocity in order to form the second weakly fluidized region, the third gas diffuser including a plurality of gas diffuser tubes or a gas diffusion plate, the plurality of gas diffuser tubes being arranged in a single stage or multiple stages along a vertical direction, the gas diffusion plate being inclined downwardly.

According to a preferred aspect of the present invention, solid materials as object to be treated are fed into the first weakly fluidized region, and incombustibles included in the solid materials are discharged by a fluidized-medium withdrawing conveyor provided below the gas diffuser.

According to a preferred aspect of the present invention, a partition wall is provided between the strongly fluidized region and the second weakly fluidized region.

According to a preferred aspect of the present invention, the gas diffusion plate is inclined downwardly toward the strongly fluidized region.

### Advantages of the Invention

The present invention offers the following advantages:
(1) In the main combustion chamber (or the main combustion region) in which object to be treated (e.g., materials to be incinerated) is fed, a fluidized condition suitable for uniformly dispersing the object to be treated can be maintained, and the weakly fluidized region in the heat recovery chamber (or the heat recovery region) in which the heat recovery device is provided can be maintained under a fluidized condition suitable for heat recovery. Therefore, the apparatus according to the present invention can uniformly combust the object to be treated in the main combustion chamber (or the main combustion region), and can stably recover the heat energy in the heat recovery chamber (or the heat recovery region).
(2) The apparatus according to the present invention can optimize the fluidized condition of the fluidized medium returning from the weakly fluidized region in the heat recovery chamber (or the heat recovery region) to the strongly fluidized region in the main combustion chamber (or the main combustion region). Thus, the fluidized medium can smoothly circulate from the heat recovery chamber (or the heat recovery region) to the main combustion chamber (or the main combustion region). Therefore, the fluidized medium can circulate well between the heat recovery chamber (or the heat recovery region) and the main combustion chamber, and controlling of such circulation can be achieved, while the incombustibles can be discharged smoothly, so that stable heat recovery can be achieved.

### Brief Description of Drawings

FIG. 1 is a vertical cross-sectional view showing a first embodiment of a fluidized-bed heat recovery apparatus according to the present invention;
FIG. 2 is a vertical cross-sectional view showing a second embodiment of the fluidized-bed heat recovery apparatus according to the present invention;
FIG. 3 is a vertical cross-sectional view showing a third embodiment of the fluidized-bed heat recovery apparatus according to the present invention; and
FIG. 4 is a vertical cross-sectional view showing a fourth embodiment of the fluidized-bed heat recovery apparatus according to the present invention.

### Description of Embodiments

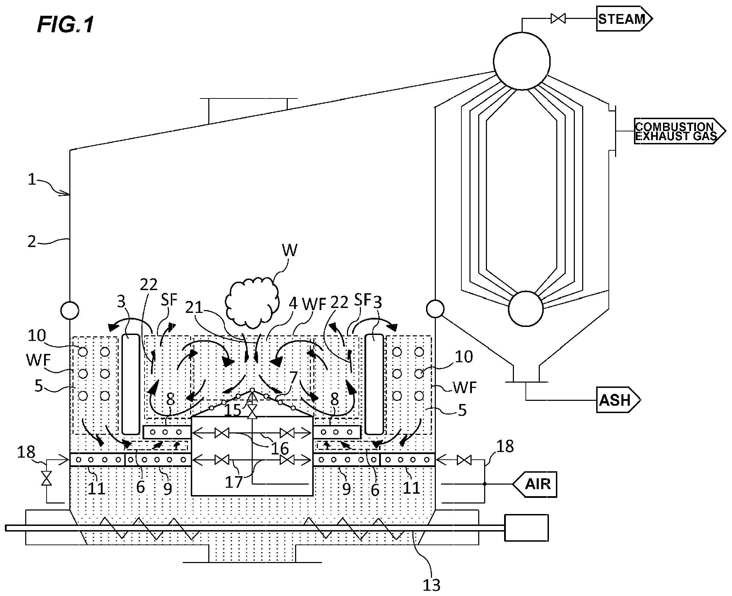

Embodiments of a fluidized-bed heat recovery apparatus according to the present invention will be described below with reference to FIGS. 1 through 4. In FIGS. 1 through 4, identical or corresponding components are denoted by identical reference numerals, and will not be described in duplication.

FIG. 1 is a vertical cross-sectional view showing a first embodiment of a fluidized-bed heat recovery apparatus according to the present invention. As shown in FIG. 1, a fluidized-bed reactor 1 includes a furnace body 2 having a substantially square tubular shape. A fluidized bed in which a fluidized medium is fluidized is formed in the furnace body 2. The interior of the furnace body 2 is divided by a pair of right and left partition walls 3, 3 into a single main combustion chamber 4 located at a central portion of the furnace body 2, and two heat recovery chambers 5, 5 located at both sides of the furnace body 2. The main combustion chamber 4 has, at a bottom thereof, a gas diffusion plate 7 for ejecting fluidizing air as a fluidizing gas into the furnace. This gas diffusion plate 7 has a chevron shape which is the highest at its center and is gradually lowered toward both side edges thereof. The gas diffusion plate 7 is a plate structure having a number of openings (or nozzles) through which the fluidizing air as the fluidizing gas is ejected into the furnace. The gas diffusion plate 7 constitutes a first gas diffuser.

At both sides of the gas diffusion plate 7, a plurality of gas diffuser tubes 8 and 9 for ejecting fluidizing air as a fluidizing gas into the furnace are disposed in two stages along a vertical direction. The gas diffuser tubes 8 and 9 are comprised of pipes having a number of openings (or nozzles) through which the fluidizing air as a fluidizing gas is ejected into the furnace. The gas diffuser tubes 8, 9 constitute a second gas diffuser. An arrangement of the gas diffuser tubes 8 and the gas diffuser tubes 9 arranged in two stages can be arbitrarily determined depending on an amount of incombustibles or other factors, such as overlapping arrangement or staggered arrangement along the vertical direction. The chevron-shaped gas diffusion plate 7 ejects the fluidizing air so as to give a relatively small fluidizing velocity. As a result, a weakly fluidized region WF (i.e., a rectangular region partitioned by dot line in FIG. 1), in which the fluidized medium is fluidized at a relatively small velocity, is formed above the gas diffusion plate 7. The weakly fluidized region WF in the main combustion chamber 4 constitutes a first weakly fluidized region. The gas diffuser tubes 8 and 9 arranged in two stages along the vertical direction eject the fluidizing air so as to give a relatively large fluidizing velocity. As a result, strongly fluidized regions SF (i.e., rectangular regions partitioned by dot lines in FIG. 1), in which the fluidized medium is fluidized actively, are formed above the gas diffuser tubes 8, 9.

On the other hand, in the heat recovery chambers 5 separated by the partition walls 3, heat recovery devices 10 which are constructed by heat transfer pipes or the like are disposed. Further, in a furnace bottom of each heat recovery chamber 5, a plurality of single-stage gas diffuser tubes 11 for ejecting fluidizing air as a fluidizing gas into the furnace are disposed. The gas diffuser tubes 11 are comprised of pipes having a number of openings (or nozzles) through which the fluidizing air as the fluidizing gas is ejected into the furnace. The gas diffuser tubes 11 constitute a third gas diffuser. The single-stage gas diffuser tubes 11 eject the fluidizing air so as to give a relatively small fluidizing velocity. As a result, weakly fluidized regions WF (i.e., rectangular regions partitioned by dot lines in FIG. 1), in which the fluidized medium is fluidized at a relatively small velocity, are formed above the gas diffuser tubes 11. The weakly fluidized regions WF in the heat recovery chambers 5 constitute a second weakly fluidized region.

In the present embodiment, an amount of the fluidizing air supplied from the first gas diffuser into the first weakly fluidized region is such that u₀/u_{mf} is in a range of 0.5 to 3, preferably in a range of 1 to 2.5. An amount of the fluidizing air supplied from the second gas diffuser into the strongly fluidized region is such that u₀/u_{mf} is in a range of 4 to 20, preferably in a range of 6 to 12. An amount of the fluidizing air supplied from the third gas diffuser into the second weakly fluidized region is such that u₀/u_{mf} is in a range of 0 to 3, preferably in a range of 0.5 to 2. Here, "u₀" represents a superficial velocity, and "u_{mf}" represents a minimum fluidizing superficial velocity.

The gas diffusion plate 7 in the weakly fluidized region WF of the main combustion chamber 4 is downwardly sloped (or inclined downwardly) towards the strongly fluidized regions SF above the gas diffuser tubes 8, 9 arranged in two stages along the vertical direction. Further, lower regions of the strongly fluidized regions SF below the gas diffuser tubes 8, 9 and lower regions of the heat recovery chambers 5 below the gas diffuser tubes 11 are in communication with a fluidized-medium withdrawing conveyor 13, so that the fluidized-medium withdrawing conveyor 13 discharges incombustibles, included in the fluidized medium and object to be incinerated, to the outside. A chute, in which the horizontal cross-sectional area of the furnace body 2 gradually decreases downward, is formed below the gas diffusion plate 7, the gas diffuser tubes 8, 9, and the gas diffuser tubes 11, so that the chute guides the incombustibles together with the fluidized medium to the fluidized-medium withdrawing conveyor 13. An air pipe 15 is coupled to the gas diffusion plate 7, air pipes 16 are coupled to the upper-stage gas diffuser tubes 8 in the strongly fluidized regions SF, air pipes 17 are coupled to the lower-stage gas diffuser tubes 9, and air pipes 18 are coupled to the gas diffuser tubes 11 in the furnace bottoms of the heat recovery chambers 5.

In the fluidized-bed reactor 1 constructed as described above, an object W to be incinerated is fed from a feeding port (not shown) formed in the furnace body 2 into the weakly fluidized region WF of the main combustion chamber 4. The object W is combusted in a reducing atmosphere due to a low oxygen condition while being swallowed by a downward flow 21 of the fluidized medium. Thereafter, the fluidized medium flows toward the strongly fluidized region SF along the inclined surface of the gas diffusion plate 7. The object W that has flowed into the strongly fluidized region SF together with the fluidized medium ascends by an upward flow 22 of the fluidized medium while being sufficiently combusted in an oxidized atmosphere due to a large amount of oxygen.

Thereafter, the fluidized medium and the object W are returned to the weakly fluidized region WF again and swallowed by the downward flow 21, as indicated by arrows. Therefore, such a swirling flow of the fluidized medium disperses the object W in the fluidized bed, so that the object W can be uniformly and stably combusted.

On the other hand, a part of the upward flow 22 of the fluidized medium in the strongly fluidized region SF flows over the partition wall 3 into another weakly fluidized region WF in the heat recovery chamber 5. The fluidized medium gives heat to the heat recovery device 10 disposed in the heat recovery chamber 5 while descending in the weakly fluidized region WF, and is returned through an opening 6 formed in a lower portion of each partition wall 3 to the strongly fluidized region SF.

The weakly fluidized region WF, in which the heat recovery device 10 is provided, is in an oxidized atmosphere because of influx of the fluidized medium after sufficient combustion in the strongly fluidized region SF, and thus there is little risk of reduction corrosion of the heat transfer surface of the heat recovery device 10. Further, the heat transfer surface of the heat recovery device 10 is hardly worn because of the weakly fluidized condition in the heat recovery chamber 5.

On the other hand, the incombustibles included in the object W are swallowed by the downward flow 21 of the fluidized medium in the weakly fluidized region WF of the main combustion chamber 4. Thereafter, the fluidized medium changes its flow direction so as to move toward the strongly fluidized region SF. In this process, most of the incombustibles are separated and settled in the strongly fluidized region SF. However, since this strongly fluidized region SF has a gas diffuser tube structure, the incombustibles pass through gaps between the gas diffuser tubes 8 and 9 without accumulating, and are then carried out together with the fluidized medium by the fluidized-medium withdrawing conveyor 13 installed at the bottom portion of the fluidized-bed reactor 1.

The upper- and lower-stage gas diffuser tubes 8 and 9 may be arranged along a horizontal direction in a staggered manner or arranged in a grid manner. Provision of the gas diffuser tubes 8 and 9 disposed in two stages along the vertical direction enables this area to be sufficiently fluidized even if a horizontal pitch between the gas diffuser tubes 8 and 9 is increased. Moreover, increasing the pitch between the gas diffuser tubes 8 and 9 allows for discharging of larger incombustibles.

In FIG. 1, the fluidized medium and the incombustibles, which have overflowed the partition wall 3 into the heat recovery chamber 5, move downward in the weakly fluidized region WF. The incombustibles are separated and settled near the furnace bottom. Since the heat recovery chamber 5 also has a gas diffuser tube structure, the incombustibles pass through gaps between the gas diffuser tubes 5 together with the fluidized medium without accumulating, and are then carried out,, together with the fluidized medium and the incombustibles that have flowed from the strongly fluidized region SF, by the fluidized-medium withdrawing conveyor 13 installed at the lower portion of the fluidized-bed reactor 1.

The opening 6 located below the partition wall 3 is provided between the upper- and lower-stage gas diffuser tubes 8, 9 disposed below the strongly fluidized region SF, and the lower-stage gas diffuser tubes 9 are located below the opening 6, so that the fluidizing air or the fluidizing gas is adjusted. Specifically, the opening 6 serving as a passage for returning the fluidized medium from the weakly fluidized region WF in the heat recovery chamber 5 to the strongly fluidized region SF in the main combustion chamber 4 is formed between the upper- and lower-stage gas diffuser tubes 8, 9. With such structure, the lower-stage gas diffuser tubes 9 can optimize a fluidized condition of the fluidized medium returning from the weakly fluidized region WF in the heat recovery chamber 5 to the strongly fluidized region SF in the main combustion chamber 4. Further, the upper-stage gas diffuser tubes 8 can maintain an optimum fluidized condition of the fluidized medium in the strongly fluidized region SF in the main combustion chamber 4.

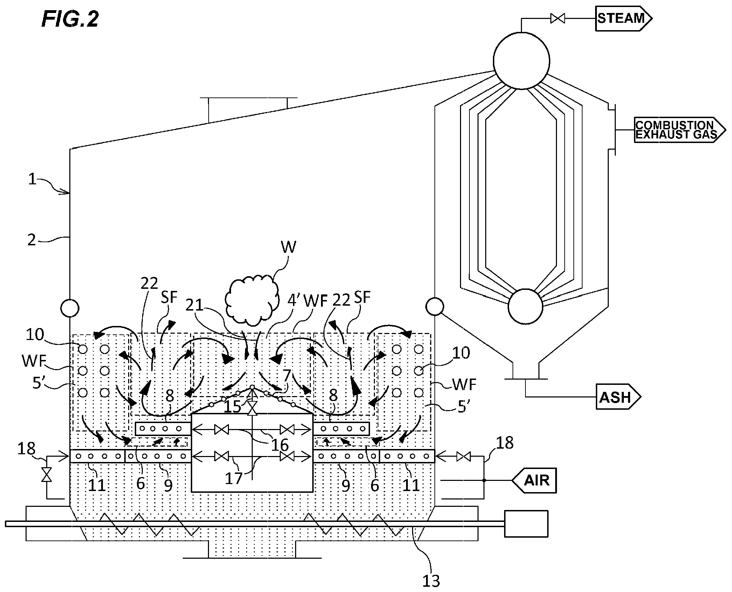

FIG. 2 is a vertical cross-sectional view showing a second embodiment of the fluidized-bed heat recovery apparatus according to the present invention. In the first embodiment shown in FIG. 1, the partition walls 3 are provided in order to prevent the object to be incinerated, which has been fed into the main combustion chamber 4, from entering the heat recovery chambers 5 without being combusted. Such unburned object may adversely affect the heat transfer tubes, because the unburned object is combusted in the heat recovery chambers 5, thus resulting in locally high temperatures. However, the partition walls 3 can be omitted depending on the properties of the object to be fed. Therefore, in the second embodiment shown in FIG. 2, the partition walls 3 are omitted. In this embodiment, the main combustion chamber 4 and the heat recovery chamber 5 in the first embodiment shown in FIG. 1 are referred to as main combustion region 4' and heat recovery region 5', respectively. In the second embodiment shown in FIG. 2, the number of components in the high-temperature fluidized bed can be reduced, and therefore a simplified structure can be provided. Further, a swirling flow of the fluidized medium is generated between the strongly fluidized region SF in the main combustion region 4' and the weakly fluidized region WF in the heat recovery region 5', so that a high-temperature combustion gas and the fluidized medium flow between the strongly fluidized region SF and the weakly fluidized region WF more actively than in the case where the partition walls 3 in the first embodiment are installed. As a result, an efficiency of the heat recovery device 10 disposed in the weakly fluidized region WF can be improved.

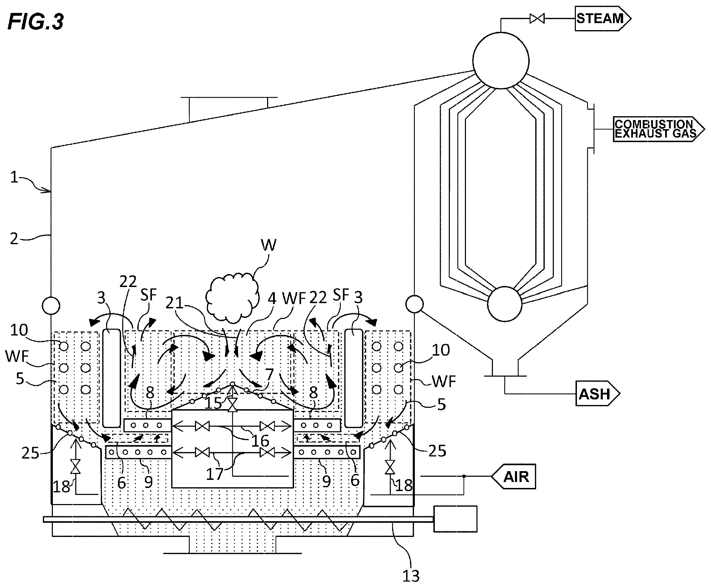

FIG. 3 is a vertical cross-sectional view showing a third embodiment of the fluidized-bed heat recovery apparatus according to the present invention. In the first embodiment shown in FIG. 1, the gas diffuser tubes 11 are provided at the lower portion of the heat recovery chamber 5. As shown in FIG. 3, instead of the gas diffuser tubes 11, heat-recovery-chamber gas diffusion plates 25 can be provided. The heat-recovery-chamber gas diffusion plates 25 are downwardly sloped (or inclined downwardly) toward the openings 6, respectively, and thus the fluidized medium in the heat recovery chambers 5 is facilitated to move toward the openings 6. Therefore, a smoother circulation of the fluidized medium between the main combustion chamber 4 and the heat recovery chambers 5 can be performed.

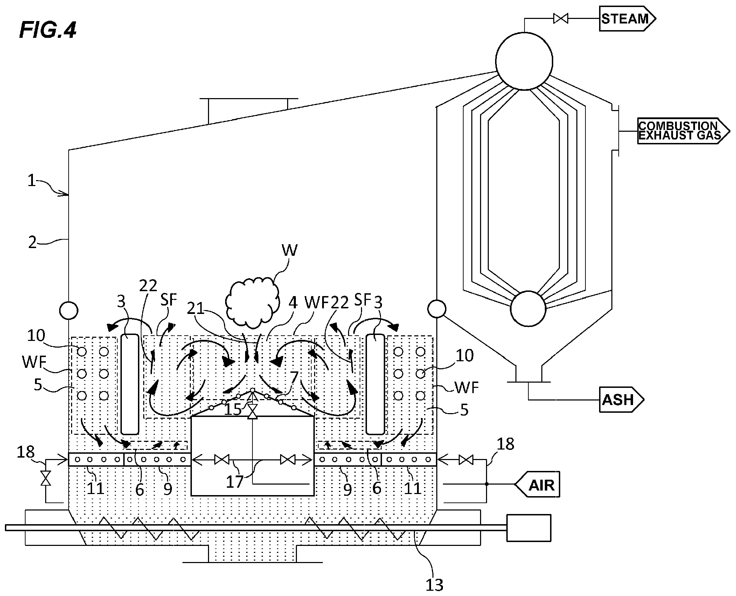

FIG. 4 is a vertical cross-sectional view showing a fourth embodiment of the fluidized-bed heat recovery apparatus according to the present invention. In the first embodiment shown in FIG. 1, the gas diffuser tubes 8 and 9 arranged in two stages along the vertical direction are provided at both sides of the gas diffusion plate 7. As shown in FIG. 4, it is possible to provide only the single-stage gas diffuser tubes 9. The air pipes 17 are coupled to the gas diffuser tubes 9. In the present embodiment, the openings 6 serving as the passage for returning the fluidized medium from the weakly fluidized regions WF in the heat recovery chambers 5 to the strongly fluidized regions SF in the main combustion chamber 4 are formed above the gas diffuser tubes 9. The gas diffuser tubes 9 can optimize the fluidized condition of the fluidized medium returning from the weakly fluidized regions WF in the heat recovery chambers 5 to the strongly fluidized regions SF in the main combustion chamber 4.

While the embodiments of the present invention have been described above, the present invention is not limited to the above embodiments, but may be reduced to practice in various different forms within the scope of the appended claims.

### Industrial Applicability

The present invention is applicable to a fluidized-bed heat recovery apparatus having a function of a heat recovery chamber for uniformly oxidizing, such as combusting or gasifying, solid materials including municipal wastes, industrial wastes, coal, and incombustibles, and for stably recovering heat energy while smoothly discharging incombustibles.

### Reference Signs List

- 1: fluidized-bed reactor
- 2: furnace body
- 3: partition wall
- 4: main combustion chamber
- 4': main combustion region
- 5: heat recovery chamber
- 5': heat recovery region
- 6: opening
- 7: gas diffusion plate
- 8, 9, 11: gas diffuser tube
- 10: heat recovery device
- 13: fluidized-medium withdrawing conveyor
- 15, 16, 17, 18: air pipe
- 21: downward flow
- 22: upward flow
- 25: heat-recovery-chamber gas diffusion plate
- W: object to be incinerated
- SF: strongly fluidized region
- WF: weakly fluidized region

## Claims

1. A fluidized-bed heat recovery apparatus comprising:
a fluidized-bed reactor (1) having a fluidized bed disposed therein;
a gas diffuser (8, 9, 11) disposed at a furnace bed of the fluidized-bed reactor (1), the gas diffuser (7, 8, 9, 11) being configured to give different fluidizing velocities in the fluidized bed; and
a heat recovery device (10) having a heat transfer surface,
wherein a first weakly fluidized region (WF), which is given a relatively small fluidizing velocity, is formed to generate a downward flow of the fluidized medium in the first weakly fluidized region (WF), and a strongly fluidized region (SF), which is given a relatively large fluidizing velocity, is formed to generate an upward flow of the fluidized medium in the strongly fluidized region (SF), thereby forming a swirling flow of the fluidized medium in the fluidized bed, and
a second weakly fluidized region (WF), which is given a relatively small fluidizing velocity, is formed outside the strongly fluidized region (SF) to generate a downward flow of the fluidized medium in the second weakly fluidized region (WF) such that a part of the fluidized medium flows from the strongly fluidized region (SF) into the second weakly fluidized region (WF), and
the heat transfer surface of the heat recovery device (10) is located in the second weakly fluidized region (WF),
wherein the gas diffuser (7, 8, 9, 11) comprises:
a first gas diffuser including a gas diffusion plate (7) configured to give the relatively small fluidizing velocity in order to form the first weakly fluidized region (WF); and
a second gas diffuser including a plurality of gas diffuser tubes (8, 9) configured to give the relative large fluidizing velocity in order to form the strongly fluidized region (SF), the plurality of gas diffuser tubes being arranged in multiple stages along a vertical direction, and
wherein a passage (6) for returning the fluidized medium from the second weakly fluidized region (WF) to the strongly fluidized region (SF) is provided between an upper stage and a lower stage of the multiple stages of the plurality of gas diffuser tubes (8, 9) constituting the second gas diffuser.

2. The fluidized-bed heat recovery apparatus according to claim 1, wherein the gas diffuser (7, 8, 9, 11) further comprises a third gas diffuser configured to give a relatively small fluidizing velocity in order to form the second weakly fluidized region (WF), the third gas diffuser including a plurality of gas diffuser tubes (11) or a gas diffusion plate (25), the plurality of gas diffuser tubes (11) being arranged in a single stage or multiple stages along a vertical direction, the gas diffusion plate (25) being inclined downwardly.

3. The fluidized-bed heat recovery apparatus according claim 1 or 2, wherein solid materials (W) as object to be treated are fed into the first weakly fluidized region (WF), and incombustibles included in the solid materials are discharged by a fluidized-medium withdrawing conveyor provided below the gas diffuser.

4. The fluidized-bed heat recovery apparatus according to any one of claims 1 through 3, wherein a partition wall (3) is provided between the strongly fluidized region (SF) and the second weakly fluidized region (WF).

5. The fluidized-bed heat recovery apparatus according to claim 1, wherein the gas diffusion plate (7) is inclined downwardly toward the strongly fluidized region (SF).

## Patentansprüche

1. Vorrichtung zur Wärmerückgewinnung in einem Wirbelbett, die Folgendes aufweist:
einen Wirbelbettreaktor (1) mit einem darin angeordneten Wirbelbett;
einen Gasdiffusor (8, 9, 11), der an einem Ofenbett des Wirbelbettreaktors angeordnet ist, wobei der Gasdiffusor (7, 8, 9, 11) konfiguriert ist, um unterschiedliche Fluidisierungsgeschwindigkeiten in dem Wirbelbett zu erhalten; und
eine Wärmewiedergewinnungsvorrichtung (10) mit einer Wärmeübertragungsoberfläche,
wobei eine erste schwach fluidisierte Region (WF), der eine relativ kleine Fluidisierungsgeschwindigkeit gegeben wird, gebildet wird, um einen abwärtsgerichteten Fluss des fluidisierten Mediums in der ersten schwach fluidisierten Region (WF) zu erzeugen, und wobei eine stark fluidisierte Region (SF), der eine relativ große Fluidisierungsgeschwindigkeit gegeben wird, geformt wird, um einen aufwärtsgerichteten Fluss des fluidisierten Mediums in der stark fluidisierten Region (SF) zu erzeugen, wodurch ein umwälzender bzw. wirbelnder Fluss des fluidisierten Mediums in dem Wirbelbett geformt wird, und
wobei eine zweite schwach fluidisierte Region (WF),der eine relativ kleine Fluidisierungsgeschwindigkeit gegeben wird, außerhalb der stark fluidisierten Region (SF) geformt wird, um einen abwärtsgerichteten Fluss des fluidisierten Mediums in der zweiten schwach fluidisierten Region (WF) zu erzeugen, sodass ein Teil des fluidisierten Mediums von der stark fluidisierten Region (SF) in die zweite schwach fluidisierte Region (WF) fließt, und
wobei die Wärmeübertragungsfläche der Wärmewiedergewinnungsvorrichtung (10) in der zweiten schwach fluidisierten Region (WF) angeordnet ist,
wobei der Gasdiffusor (7, 8, 9, 11) Folgendes aufweist:
einen ersten Gasdiffusor, der eine Gasdiffusionsplatte (7) aufweist, die konfiguriert ist, um die relativ kleine Fluidisierungsgeschwindigkeit zu erzeugen, um die erste schwach fluidisierte Region (WF) zu formen; und
einen zweiten Gasdiffusor, der eine Vielzahl von Gasdiffusorrohren (8, 9) aufweist, die konfiguriert sind, um die relativ große Fluidisierungsgeschwindigkeit zu erzeugen, um die stark fluidisierte Region (SF) zu formen, wobei die Vielzahl von Gasdiffusorrohren in mehreren Stufen entlang einer vertikalen Richtung angeordnet sind, und
wobei ein Durchlass (6) zum Zurückleiten des fluidisierten Mediums aus der zweiten schwach fluidisierten Region (WF) zu der stark fluidisierten Region (SF) zwischen einer oberen Stufe und einer unteren Stufe der mehreren Stufen der Vielzahl von Gasdiffusorrohren (8, 9) vorgesehen ist, welche den zweiten Gasdiffusor bilden.

2. Vorrichtung zur Wärmerückgewinnung in einem Wirbelbett nach Anspruch 1, wobei der Gasdiffusor (7, 8, 9, 11) weiter einen dritten Gasdiffusor aufweist, der konfiguriert ist, um eine relativ kleine Fluidisierungsgeschwindigkeit zu erzeugen, um die zweite schwach fluidisierte Region (WF) zu formen, wobei der dritte Gasdiffusor eine Vielzahl von Gasdiffusorrohren (11) oder eine Gasdiffusorplatte (25) aufweist, wobei die Vielzahl von Gasdiffusorrohren (11) in einer einzigen Stufe oder in mehreren Stufen entlang einer vertikalen Richtung angeordnet sind, wobei die Gasdiffusorplatte (25) nach unten geneigt ist.

3. Vorrichtung zur Wärmerückgewinnung in einem Wirbelbett nach Anspruch 1 oder 2, wobei feste Materialien (W) als ein zu behandelndes Objekt in die erste schwach fluidisierte Region (WF) geleitet werden, und wobei unbrennbare Stoffe, die in den festen Materialien enthalten sind, durch eine Ausbringungsfördervorrichtung für fluidisiertes Medium ausgeleitet werden, die unter dem Gasdiffusor ist.

4. Vorrichtung zur Wärmerückgewinnung in einem Wirbelbett nach einem der Ansprüche 1 bis 3, wobei eine Unterteilungswand 3 zwischen der stark fluidisierten Region (SF) und der zweiten schwach fluidisierten Region (WF) vorgesehen ist.

5. Vorrichtung zur Wärmerückgewinnung in einem Wirbelbett nach Anspruch 1, wobei die Gasdiffusorplatte (7) nach unten zu der stark fluidisierten Region (SF) geneigt ist.

## Revendications

1. Appareil de récupération de chaleur à lit fluidisé comprenant :
un réacteur à lit fluidisé (1) dans lequel est disposé un lit fluidisé ;
un diffuseur de gaz (8, 9, 11) disposé au niveau d'un lit de four du réacteur à lit fluidisé (1), le diffuseur de gaz (7, 8, 9, 11) étant configuré pour conférer différentes vitesses de fluidisation dans le lit fluidisé ; et
un dispositif de récupération de chaleur (10) ayant une surface de transfert de chaleur,
dans lequel une première région faiblement fluidisée (WF), à laquelle est conférée une vitesse de fluidisation relativement faible, est formée pour générer un écoulement descendant du milieu fluidisé dans la première région faiblement fluidisée (WF), et une région fortement fluidisée (SF), à laquelle est conférée une vitesse de fluidisation relativement élevée, est formée pour générer un écoulement ascendant du milieu fluidisé dans la région fortement fluidisée (SF), formant ainsi un écoulement tourbillonnant du milieu fluidisé dans le lit fluidisé, et
une deuxième région faiblement fluidisée (WF), à laquelle est conférée une vitesse de fluidisation relativement faible, est formée à l'extérieur de la région fortement fluidisée (SF) pour générer un écoulement descendant du milieu fluidisé dans la deuxième région faiblement fluidisée (WF) de sorte qu'une partie du milieu fluidisé s'écoule depuis la région fortement fluidisée (SF) dans la deuxième région faiblement fluidisée (WF), et
la surface de transfert thermique du dispositif de récupération de chaleur (10) est située dans la deuxième région faiblement fluidisée (WF),
dans lequel le diffuseur de gaz (7, 8, 9, 11) comprend :
un premier diffuseur de gaz comportant une plaque de diffusion de gaz (7) configurée pour conférer la vitesse de fluidisation relativement faible afin de former la première région faiblement fluidisée (WF) ; et
un deuxième diffuseur de gaz comportant une pluralité de tubes diffuseurs de gaz (8, 9) configurés pour conférer la vitesse de fluidisation relativement élevée afin de former la région fortement fluidisée (SF), la pluralité de tubes diffuseurs de gaz étant disposée en plusieurs étages le long d'une direction verticale, et
dans lequel un passage (6) pour renvoyer le milieu fluidisé depuis la deuxième région faiblement fluidisée (WF) à la région fortement fluidisée (SF) est prévu entre un étage supérieur et un étage inférieur parmi les multiples étages de la pluralité de tubes diffuseurs de gaz (8, 9) constituant le deuxième diffuseur de gaz.

2. Appareil de récupération de chaleur à lit fluidisé selon la revendication 1, dans lequel le diffuseur de gaz (7, 8, 9, 11) comprend en outre un troisième diffuseur de gaz configuré pour conférer une vitesse de fluidisation relativement faible afin de former la deuxième région faiblement fluidisée (WF), le troisième diffuseur de gaz comportant une pluralité de tubes diffuseurs de gaz (11) ou une plaque de diffusion de gaz (25), la pluralité de tubes diffuseurs de gaz (11) étant disposée en un seul étage ou en plusieurs étages le long d'une direction verticale, la plaque de diffusion de gaz (25) étant inclinée vers le bas.

3. Appareil de récupération de chaleur à lit fluidisé selon la revendication 1 ou 2, dans lequel des matériaux solides (W) en tant qu'objet à traiter sont introduits dans la première région faiblement fluidisée (WF), et des éléments incombustibles inclus dans les matériaux solides sont évacués par un convoyeur de retrait de milieu fluidisé prévu sous le diffuseur de gaz.

4. Appareil de récupération de chaleur à lit fluidisé selon l'une quelconque des revendications 1 à 3, dans lequel une paroi de séparation (3) est prévue entre la région fortement fluidisée (SF) et la deuxième région faiblement fluidisée (WF).

5. Appareil de récupération de chaleur à lit fluidisé selon la revendication 1, dans lequel la plaque de diffusion de gaz (7) est inclinée vers le bas vers la région fortement fluidisée (SF) .
